# EUROPÄISCHE PATENTSCHRIFT

(11) **EP 2 427 511 B1**
(45) Veröffentlichungstag und Bekanntmachung des Hinweises auf die Patenterteilung: **03.04.2013**
(21) Anmeldenummer: 10720381.2
(22) Anmeldetag: 04.05.2010
(51) Int. Cl.: C08G 63/00

(54) **VERWENDUNG EINES POLYESTERS ZUR HERSTELLUNG VON FORMTEILEN MIT EINEM NIEDRIGEN GEHALT AN EXTRAHIERBAREN VERBINDUNGEN**
USE OF A POLYESTER FOR PRODUCTION OF MOULDED PARTS HAVING A LOW CONTENT OF ELUTABLE COMPONENTS
UTILISATION D'UN POLYESTER POUR LA PRODUCTION DES OBJETS MOULÉS AYANT UN TAUX FAIBLE DE COMPOSÉS ÉLUABLES

(30) Priorität: 07.05.2009 DE 102009020211
(43) Veröffentlichungstag der Anmeldung: 14.03.2012
(73) Patentinhaber: BASF SE, 67056 Ludwigshafen (DE)
(72) Erfinder: BENTEN, Rebekka von, 67063 Ludwigshafen (DE); ANDERLIK, Rainer, 69126 Heidelberg (DE); EIBECK, Peter, 67346 Speyer (DE); VÖLKEL, Mark, 68526 Ladenburg (DE)
(86) Internationale Anmeldenummer: PCT/EP2010/056044
(87) Internationale Veröffentlichungsnummer: WO 2010/128052

(56) Entgegenhaltungen:
- WO-A1-92/17522
- WO-A1-2005/030834
- WO-A2-2004/101666
- DE-A1-102005 037 754
- US-A1- 2004 138 381

## Beschreibung

Die vorliegende Erfindung betrifft die Verwendung eines Polyesters zur Herstellung von Formteilen mit einem Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0,1 Gew.-%, (jeweils bezogen auf das Gesamtgewicht aus Polyester und extrahierbaren Verbindungen und bestimmt durch 24-stündige Extraktion mit Xylol bei 139°C), wobei der Polyester nach Verfahren umfassend die Schritte
a) Herstellung eines Polyesters durch Polykondensation, und
b) Compoundieren des in Schritt a) erhaltenen Polyesters in Anwesenheit von mindestens einer di- oder polyfunktionellen Verbindung, die mit dem Polyester reaktiv ist, wobei ein Polyester erhalten wird, der ein höheres Molekulargewicht aufweist, als der in Schritt a) erhaltene Polyester,
herstellbar ist.

Polyester werden in einer Vielzahl von Anwendungen eingesetzt. So werden Polyester, zum Beispiel Polyethylenterephthalat, mit niedrigen Molekulargewichten im Allgemeinen für weniger anspruchsvolle Anwendungen, zum Beispiel Faseranwendungen, eingesetzt, während Polyester, zum Beispiel Polyethylenterephthalat, mit höheren Molekulargewichten in Verpackungsanwendungen, zum Beispiel zur Herstellung von Flaschen, eingesetzt werden. Ebenso wird z. B. Polybutylenterephthalat mit verschiedenen Molekulargewichten in verschiedenen Anwendungen eingesetzt, zum Beispiel zur Herstellung von Formteilen mit guten physikalischen und mechanischen Eigenschaften, die durch Schmelzformen bzw. Spritzgießen des Polybutylenterephthalats hergestellt werden können.

Üblicherweise werden Polyester mit hohem Molekulargewicht ausgehend von Polyestern mit niedrigem Molekulargewicht derselben Zusammensetzung durch Polymerisation in der Schmelze hergestellt. Dabei werden in einer Polyesteranlage, zum Beispiel in einer Anlage zur Herstellung von Polybutylenterephthalat, häufig Produkte mit verschiedenen Molekulargewichten hergestellt. Diese unterscheiden sich in ihren Schmelzviskositäten und in ihren physikalischen Eigenschaften. Um die Polyester mit verschiedenen Molekulargewichten zu erhalten, werden die Polyesteranlagen üblicherweise mit verschiedenen Fahrweisen betrieben. Das erfordert einen erhöhten Regleraufwand, so dass die Anlage häufig nicht unter optimalen Bedingungen betrieben werden kann.

Auch Verfahren zur Herstellung von Polyestern, umfassend die Schritte
a) Herstellung eines Polyesters durch Polykondensation, und
b) Compoundieren des in Schritt a) erhaltenen Polyesters in Anwesenheit von mindestens einer di- oder polyfunktionellen Verbindung, die mit dem Polyester reaktiv ist, wobei ein Polyester erhalten wird, der ein höheres Molekulargewicht aufweist, als der in Schritt a) erhaltene Polyester,
sind bekannt und werden in DE 10 2005 037 754 A1 beschrieben.

Bei der Herstellung von Formteilen unter Einsatz der genannten Polyester ist es oftmals schwierig, toxikologische oder lebensmittelrechtliche Anforderungen oder aber auch Geruchsanforderungen zu erfüllen, die beispielsweise im Lebensmittelsektor üblich sind, ohne die mechanischen oder rheologischen Eigenschaften der Polyester negativ zu beeinflussen.

Ursache für vergleichsweise schlechte toxikologische, lebensmittelrechtliche oder olfaktorische Eigenschaften sind oftmals Nebenprodukte, Oligomere und/oder Monomer- und/oder Lösungsmittelreste, wie sie beispielsweise im Herstell- bzw. Verarbeitungsprozeß der Polyester gebildet oder zugesetzt werden, und die als Verunreinigungen, oftmals in leichtflüchtiger Form, im Polyester enthalten sein können. Diese Stoffe werden im Rahmen der vorliegenden Erfindung als "extrahierbare Verbindungen" bezeichnet und sind bestimmbar als der Gewichtsanteil, der sich durch 24-stündige Extraktion mit Xylol bei 139°C aus dem Formteil extrahieren läßt. Typischerweise haben kommerziell erhältliche Polyester einen Gehalt an extrahierbaren Verbindungen von mehr als 0,5 Gew.-%, in der Regel von mehr als 0,5 Gew.-% bis 1 Gew.-% (bezogen auf das Gesamtgewicht von Polyester und extrahierbaren Verbindungen).

Aufgabe der vorliegenden Erfindung ist es daher, Formteile umfassend Polyester bereitzustellen, wobei die Formteile gute toxikologische, lebensmittelrechtliche und/oder olfaktorische Eigenschaften haben, ohne die mechanischen oder rheologischen Eigenschaften wesentlich zu verschlechtern.

Diese Aufgabe wird erfindungsgemäß gelöst durch die Verwendung eines Polyesters zur Herstellung von Formteilen mit einem Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0,1 Gew.-%, (jeweils bezogen auf das Gesamtgewicht aus Polyester und extrahierbaren Verbindungen und bestimmt durch 24-stündige Extraktion mit Xylol bei 139°C), wobei der Polyester nach Verfahren umfassend die Schritte
a) Herstellung eines Polyesters durch Polykondensation, und
b) Compoundieren des in Schritt a) erhaltenen Polyesters in Anwesenheit von mindestens einer di- oder polyfunktionellen Verbindung, die mit dem Polyester reaktiv ist, wobei ein Polyester erhalten wird, der ein höheres Molekulargewicht aufweist, als der in Schritt a) erhaltene Polyester,
herstellbar ist.

Das im Rahmen der erfindungsgemäßen Verwendung ausgeübte Verfahren zur Herstellung der Polyester wird so betrieben, dass in Schritt a), der in einer Polyesteranlage durchgeführt wird, nur der Polyester mit dem geringsten gewünschten Molekulargewicht, insbesondere einem M_{w} von ≤ 65.000 g/mol hergestellt wird. Im anschließenden Compoundierschritt, der üblicherweise bei der Herstellung von Polyestern stattfindet, erfolgt dann eine Kettenverlängerung des Polyesters, durch die Polyester mit den gewünschten Molekulargewichten, die höher sind als das Molekulargewicht des in Schritt a) hergestellten Polyesters, hergestellt werden können. Dadurch wird eine optimale Fahrweise in der Polyesteranlage erleichtert, und es wird ermöglicht, das gewünschte Molekulargewicht des Polyesters zu einem späteren Zeitpunkt direkt nach den Bedürfnissen des Markts einzustellen.

Die Erhöhung des Molekulargewichts von Polyestern durch Zugabe von di- oder polyfunktionellen Verbindungen, die als Kettenverlängerungsmittel dienen, ist aus dem Stand der Technik bekannt.

So betrifft US 6,388,025 ein Verfahren zur Erhöhung des Molekulargewichts von aliphatischen Polyesterharzen von alphatischen Dicarbonsäuren mit 2 bis 22 Kohlenstoffatomen oder von Hydroxysäuren mit 2 bis 22 Kohlenstoffatomen, worin das feste Harz mit dem Kettenverlängerungsmittel in Kontakt gebracht wird. Als Kettenverlängerungsmittel werden dabei bevorzugt organische Diisocyanate eingesetzt.

US 6,376,624 betrifft Polyesterzusammensetzungen von Polyestern mit hohem Molekulargewicht, die durch Erhitzen einer geschmolzenen Mischung eines Präpolymers eines Polyesterharzes und eines multifunktionellen Kettenverlängerungsmittels mit funktionellen Gruppen ausgewählt aus Methoxy- und Isocyanatgruppen hergestellt werden.

US 2004/0138381 A1 betrifft spezielle Kettenverlängerungsmittel, die ausgehend von epoxyfunktionellen (meth)acrylischen Monomeren und Styrolmonomeren und/oder (meth)acrylischen Monomeren hergestellt werden. Des Weiteren sind in US 2004/0138381 A1 Polymerzusammensetzungen offenbart, worin mindestens ein durch Kondensationspolymerisation hergestelltes Polymer mit dem Kettenverlängerungsmittel gemäß US 2004/0138381 A1 umgesetzt wird, wobei ein kettenverlängertes Polymer erhalten wird. Bei dem durch Kondensationspolymerisation hergestellten Polymer kann es sich um Polyester handeln. Gemäß US 2004/0138381 A1 können mit den speziellen Kettenverlängerungsmitteln die Eigenschaften von niedrigmolekularen Polymeren sowie von recycelten Polymeren verbessert werden.

Zwar betreffen die oben genannten Dokumente Verfahren zur Kettenverlängerung von Polyestern, jedoch ist in keinem der Dokumente ein Herstellungsverfahren offenbart, das die Herstellung eines niedrigmolekluaren Polyesters durch Polykondensation betrifft und das anschließende Compoundieren in Gegenwart von Kettenverlängerungsmitteln, wie es gemäß der vorliegenden Anmeldung beschrieben ist. Die in DE 10 2005 037 754 A1 genannten Verfahren und Polyesterformmassen werde zwar detailliert beschrieben, Angaben oder Hinweise auf toxikologische, lebensmittelrechtliche und/oder olfaktorische Eigenschaften sowie extrahierbare Verbindungen und deren Mengenanteil werden aber nicht offenbart.

Durch den Einsatz der durch die Kombination der Verfahrensschritte a) und b) erhältlichen Polyester zur Herstellung von Formteilen ergibt sich der Vorteil der erfindungsgemäßen Verwendung, nämlich die Herstellung von Formteilen mit einem Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0,1 Gew.-%.

### Schritt a)

Als Polyester kommen in dem Verfahren beliebige Polyester oder Polyestermischungen in Betracht. Die Polyester werden üblicherweise ausgehend von einer Dicarbonsäure oder einem Derivat davon und einem Diol hergestellt.

Beispiele für geeignete Dicarbonsäuren sind aliphatische oder aromatische Dicarbonsäuren sowie Gemische davon.

Geeignete aliphatische oder cycloaliphatische Dicarbonsäuren sind zum Beispiel Bernsteinsäure, Adipinsäure, Azelainsäure, Sebacinsäure, Dodecandisäuren, Cyclohexandicarbonsäuren und Gemische der genannten Säuren.

Geeignete aromatische Dicarbonsäuren sind zum Beispiel solche, in denen der aromatische Ring unsubstituiert ist oder weiter substituiert ist mit zum Beispiel Halogen, wie Chlor oder Brom, oder C₁₋₄-Alkyl, wie Methyl, Ethyl, Isopropyl, n-Propyl, n-Butyl, i-Butyl oder tert.-Butyl. Die aromatischen Dicarbonsäuren können o-, m- oder p-Dicarbonsäuren oder Gemische davon sein. Bevorzugt handelt es sich bei den Dicarbonsäuren um p-Dicarbonsäuren. Bevorzugte Dicarbonsäuren sind Naphthalindicarbonäsure, insbesondere 1,4-Naphthalindicarbonsäure, Terephthalsäure, Isophthalsäure, Phthalsäure und Gemische davon.

In dem Verfahren können die vorstehend genannten aromatischen Dicarbonsäuren oder aliphatischen Dicarbonsäuren allein eingesetzt werden oder als Mischungen aliphatischer und aromatischer Dicarbonsäuren, wobei im Allgemeinen bis zu 60 mol-% der aromatischen Dicarbonsäuren gegebenenfalls durch die vorstehend genannten aliphatischen Dicarbonsäuren ersetzt sein können.

Besonders bevorzugt wird Terephthalsäure als Dicarbonsäure eingesetzt, oder eine Mischung von Dicarbonsäuren, die Terephthalsäure als Hauptsäurekomponente in einer Menge von mindestens 40 mol-%, bevorzugt mindestens 90 mol-%, bezogen auf die gesamte Säurekomponente, enthält.

Anstelle der Dicarbonsäuren können auch Derivate davon, zum Beispiel Anhydride, Säurechloride oder niedere Ester oder Halbester, deren Alkylgruppen 1 bis 6 Kohlenstoffatome aufweisen, eingesetzt werden. Bevorzugte Ester oder Halbester sind Methylester. Besonders bevorzugt wird Dimethylterephthalat eingesetzt.

Geeignete Diole können aromatische oder aliphatische Diole sein, wobei aliphatische Diole bevorzugt sind.

Geeignete aromatische Diole sind zum Beispiel aromatische Diole auf Basis von Diphenolen der allgemeinen Formel I

HO-H₄C₆-A-C₆H₄-OH (I)

worin A eine Einfachbindung, eine C₁₋₃-Alkylen-, eine C₂₋₃-Alkyliden-, eine C₃₋₆-Cycloalkylidengruppe, die mit bis zu 4 Alkylresten substituiert sein kann, und insbesondere eine 2,2,4-Trimethylcyclohexylidengruppe ist, oder S oder SO₂ bedeutet.

Bevorzugte Diphenole der Formel I sind zum Beispiel 4,4'-Dihydroxydiphenyl, 2,2-Bis-(4-hydroxyphenyl)propan, 3,4-Bis-(4-hydroxyphenyl)-2-methylbutan, 1,1-Bis(4-hydroxyphenyl)cyclohexan und Bisphenol-TMC.

Geeignete aliphatische Diole sind insbesondere Alkandiole, die 2 bis 10 Kohlenstoffatome, bevorzugt 2 bis 6 Kohlenstoffatome, aufweisen. Bevorzugte aliphatische Diole sind zum Beispiel 1,2-Ethandiol (Ethylenglykol), 1,4-Butandiol (Butylenglykol), 1,6-Hexandiol, 1,4-Hexandiol, 1,4-Cyclohexandiol, Neopentylglykol, Diethylenglykol, 1,3-Propandiol, Dimethyl-1,3-propandiol, 2-Ethyl-2-butyl-1,3-propandiol und Gemische davon. Bevorzugte aliphatische Diole sind 1,2-Ethandiol und 1,4-Butandiol. Besonders bevorzugt ist 1,4-Butandiol. Dabei werden die bevorzugten und besonders bevorzugten aliphatischen Diole als Haupt-Diolkomponente oder als alleinige Komponente in Schritt a) des erfindungsgemäßen Verfahrens eingesetzt. Das bedeutet, dass der Anteil dieser Diole in einer bevorzugten Ausführungsform mindestens 80 mol-%, bevorzugt mindestens 90 mol-% beträgt.

Ganz besonders bevorzugt werden mit dem Verfahren somit Polyester hergestellt, die Polyalkylenterephthalate aufweisen, die sich von Alkandiolen mit 2 bis 10 Kohlenstoffatomen, bevorzugt 2 bis 6 Kohlenstoffatomen, ableiten. Insbesondere bevorzugt sind Polyethylenterephthalat, Polybutylenterephthalat oder Gemische daraus. Weiter bevorzugt ist Polybutylenterephthalat (Poly(1,4-butylen)terephthalat).

Die gemäß Schritt a) des Verfahrens hergestellten Polyester weisen in einer bevorzugten Ausführungsform ein Molekulargewicht von Mₙ von ≤ 60.000 g/mol, besonders bevorzugt ≤ 50.000 g/mol, ganz besonders bevorzugt ≤ 30.000 g/mol auf. Das Molekulargewicht wird mittels Gelpermeationschromatographie (GPC) mit Polystyrolstandard ermittelt.

Somit weisen die gemäß Schritt a) des Verfahrens hergestellten Polyester eine relative Viskosität von bevorzugt 50 bis 200 ml/g, besonders bevorzugt 100 bis 200 ml/g, ganz besonders bevorzugt 100 bis 180 ml/g auf. Die Viskosität wird gemäß ISO 1628 in Lösung (0,05 g/ml Phenol/1,2-Dichlorbenzol (Gewichtsverhältnis 1:1)) bei 25 °C bestimmt.

Die Herstellung des Polyesters, der ein niedriges Molekulargewicht aufweist und somit niedrigviskos ist, erfolgt in Schritt a) des Verfahrens gemäß dem Fachmann bekannten Polykondensationsverfahren.

Solche Polykondensationsverfahren zur Herstellung von Polyestern sind dem Fachmann bekannt und zum Beispiel in Ullmann's Encyclopedia of Industrial Chemistry, 6th Edition, Wiley-VCH, Band 28, S. 86 ff beschrieben. Es ist möglich, die Polyester durch direkte Veresterung der Säuren oder z. B. durch Esteraustausch mit den Estern der Säuren und anschließende Polykondensation herzustellen.

Die Herstellung der Polyester in Schritt a) des Verfahrens erfolgt im Allgemeinen durch Polykondensation in der Schmelze bei Temperaturen von im Allgemeinen 100 bis 300 °C, bevorzugt 180 bis 280 °C, besonders bevorzugt 180 bis 260 °C. Im Allgemeinen wird die Polykondensation in Anwesenheit eines im Stand der Technik bekannten Katalysators durchgeführt, zum Beispiel in Anwesenheit von Tetraisopropyltitan oder Titanacetylacetonat.

Geeignete Verfahrensbedingungen und Zusatzstoffe zur Entfernung des bei der Polykondensation im Allgemeinen entstehenden Wasser sowie geeignete Druck-Bereiche zur Durchführung des Polykondensationsverfahrens sind dem Fachmann bekannt.

Es ist möglich, die Polykondensation in Schritt a) in Gegenwart von polyfunktionellen Verbindungen durchzuführen, die drei oder mehr Gruppen aufweisen, die mit den endständigen OH und COOH-Gruppen des Polyesters reaktiv sind. Geeignete polyfunktionelle Verbindungen sind zum Beispiel Glycerin, Trimethylolpropan, Pentaerythriol und Trimellithsäureanhydrid. Die polyfunktionellen Verbindungen können in Schritt a) des erfindungsgemäßen Verfahrens in einer Menge von im Allgemeinen 0 bis 5 mol-%, bevorzugt 0,1 bis 5 mol-%, bezogen auf die molare Menge der eingesetzten Dicarbonsäure, eingesetzt werden.

Schritt a) des Verfahrens kann diskontinuierlich oder kontinuierlich durchgeführt werden.

Geeignete Reaktoren sind dem Fachmann bekannt. Beispielsweise können Rührkesselreaktoren bzw. Rührkesselkaskaden oder Rohrreaktoren eingesetzt werden.

Der in Schritt a) erhaltene Polyester kann nach dem Fachmann bekannten Verfahren aufgearbeitet werden. Üblicherweise wird der in Schritt a) erhaltene Polyester Schritt b) in Form von Granulat zugeführt, es ist jedoch ebenfalls möglich, den in Schritt a) erhaltenen Polyester in Schritt b) in Form einer Schmelze zuzuführen.

Die Herstellung von Polyestern mit höheren Molekulargewichten erfolgt ausgehend von den gemäß Schritt a) hergestellten Polyestern in einem an Schritt a) anschließenden Compoundierschritt. Dieser Compoundierschritt wird im Allgemeinen bei der Herstellung von Polyestern durchgeführt, um den Polyestern Additive zuzusetzen. Überraschenderweise wurde gefunden, dass in diesem Compundierschritt gleichzeitig eine Erhöhung des Molekulargewichts des Polyesters erzielt werden kann, wenn der Compoundierschritt in Anwesenheit von di- oder polyfunktionellen Verbindungen, die mit dem Polyester reaktiv sind, erfolgt. Unter Verbindungen, die mit dem Polyester reaktiv sind, sind solche Verbindungen zu verstehen, die mit den in dem gemäß Schritt a) erhaltenen Polyester vorhandenen OH- und/oder COOH-Gruppen reagieren können.

Dadurch können höhermolekulare Polyester hergestellt werden, ohne Änderung des in Schritt a) durchgeführten Polykondensationsverfahrens, das unabhängig von dem Molekulargewicht des Polyesters durchgeführt wird, wobei ein Polyester mit einem niedrigen Molekulargewicht, das bereits vorstehend angegeben ist, erhalten wird. Des Weiteren kann mit Hilfe dieses Verfahrens eine Zeitersparnis erzielt werden, da Schritt a) in einer kürzeren Zeit durchgeführt werden kann als in anderen Verfahren gemäß des Standes der Technik, worin ein hochmolekularer Polyester durch Polykondensation hergestellt wird. Die in Schritt b) durchgeführte Erhöhung des Molekulargewichts des Polyesters erfolgt in sehr kurzen Reaktionszeiten.

Ein Filtrieren des in Schritt a) erhaltenen Polyesters ist nicht erforderlich. Mit Hilfe des Verfahrens können somit stippenfreie Polyester erhalten werden, ohne Filtrieren der Polyestermasse.

Es wird somit in dem im Allgemeinen in der Polyesterherstellung durchgeführten Compoundierschritt eine Erhöhung des Molekulargewichts des Polyesters erzielt.

### Schritt b)

In Schritt b) erfolgt das Compoundieren des in Schritt a) erhaltenen Polyesters in Anwesenheit von di- oder polyfunktionellen Verbindungen, die mit dem Polyester reaktiv sind.

Geeignete di- oder polyfunktionelle Verbindungen, die mit dem Polyester reaktiv sind, sind dem Fachmann bekannt. Bevorzugt wird mindestens eine di- oder polyfunktionelle Verbindung eingesetzt, die mindestens zwei Imido-, Amido-, Epoxy- und/oder Isocyanatogruppen enthält. Die di- oder polyfunktionelle Verbindung kann eine monomere, oligomere oder polymere Verbindung sein.

Geeignete di- oder polyfunktionelle Verbindungen sind zum Beispiel organische Diisocyante und Polycyanate, Diepoxide sowie Dianhydride von aromatischen Tetracarbonsäuren wie Pyromellithsäuredianhydrid. Geeignete organische Diisocyanate und Polyisocyanate sind zum Beispiel in US 6,388,025 erwähnt. Bevorzugte Diisocyanate sind Hexamethylendiisocyanat, Diphenylmethandiisocyanat und Isophorondiisocyanat.

Des Weiteren sind neben Diepoxiden auch Epoxide mit mehr als zwei Epoxygruppen geeignet, zum Beispiel Epoxidharze des Novolac-Typs, wie sie in US 6,376,624 offenbart sind.

Weiterhin sind di- oder polyfunktionelle Verbindungen geeignet ausgewählt aus Lactamen wie N,N'-Carbonylbiscaprolactam, Epoxidharzen wie Bisphenol-A-Epichlorhydrin und Carbodiimiden wie Bis(2,6-diisopropylphenyl)carbodiimid.

Weitere geeignete di- oder polyfunktionelle Verbindungen, die in Schritt b) des erfindungsgemäßen Verfahrens eingesetzt werden können, sind Polymerisationsprodukte, die durch Polymerisation von mindestens einem epoxyfunktionellen (meth)acrylischen Monomer und mindestens einem Styrolmonomer und/oder (meth)acrylischen Monomer erhältlich sind, zum Beispiel Epoxid-modifizierte Styrol-Acryl-Polymere. Solche di- oder polyfunktionellen Verbindungen sind in US 2004/0138381 A1 offenbart und werden bevorzugt eingesetzt.

Spezielle geeignete di- oder polyfunktionelle Verbindungen, die in einer weiteren Ausführungsform bevorzugt in Schritt b) des Verfahrens eingesetzt werden, sind die folgenden kommerziell erhältlichen Verbindungen: JONCRYL^{®} ADR 4368 von Johnson Polymer bzw. BASF SE, ALLINCO^{®}-CDC von DSM, EPIKOTE™ 828 von Resolution Performance Product und Stabaxol I von RheinChemie.

Die in Schritt b) des oben gennanten Verfahrens eingesetzte di- oder polyfunktionelle Verbindung wird im Allgemeinen in einer Menge von 0,01 Gew.-% bis 2 Gew.-%, bevorzugt 0,05 Gew.-% bis 0,5 Gew.-%, besonders bevorzugt 0,1 Gew.-% bis 0,3 Gew.-%, bezogen auf die Gesamtmenge des Polyesters, eingesetzt.

Die Durchführung von Schritt b), das heißt das Compoundieren eines Polyesters, ist dem Fachmann bekannt und erfolgt gemäß dem Fachmann bekannten Verfahren.

Im Allgemeinen wird bei dem Compoundieren des Polyesters der geschmolzene Polyester mit weiteren Zusätzen gemischt. Erfindungsgemäß wird der Polyester in Schritt b) des Verfahrens mit mindestens einer di- oder polyfunktionellen Verbindung, die mit dem Polyester reaktiv ist, gemischt.

Bevorzugt wird in Schritt b) des Verfahrens jedoch mindestens ein weiteres Additiv in dem Compoundierschritt zugegeben. Geeignete Additive sind ausgewählt aus der Gruppe bestehend aus Stabilisatoren bzw. Inhibitoren zur Vermeidung von oxidativer Zersetzung und thermischer Zersetzung und Zersetzung durch ultraviolettes Licht, Gleitmittel, Farbmittel wie Farbstoffe und Pigmente, Füllstoffe, zum Beispiel teilchenförmige Füllstoffe, Flammschutzmittel, Keimbildner.

Gemäß dem Verfahren erfolgt Schritt b) in der Schmelze bei Temperaturen von im Allgemeinen 170°C bis 310°C, bevorzugt 180 bis 300°C, besonders bevorzugt 190 bis 290°C.

Üblicherweise wird Schritt b) so durchgeführt, dass der in Schritt a) erhaltene Polyester mit der mindestens einen di- oder polyfunktionellen Verbindung vorgemischt wird und die Mischung anschließend compoundiert wird. Die Mischung des in Schritt a) erhaltenen Polyesters und der di- oder polyfunktionellen Verbindung kann durch beliebige, dem Fachmann bekannte Verfahren durchgeführt werden. Geeignete Vorrichtungen zur Mischung des in Schritt a) erhaltenen Polyesters und der mindestens einen di- oder polyfunktionellen Verbindung sind dem Fachmann bekannt. Die Mischung kann in der Schmelze oder in Form einer Mischung von Feststoffen erfolgen. Werden flüssige Additive zugesetzt, ist eine Mischung in der Schmelze bevorzugt.

Die Mischung des in Schritt a) erhaltenen Polyesters und der di- oder polyfunktionellen Verbindung kann somit dadurch erfolgen, dass der in Schritt a) erhaltene Polyester in Form von Granulat mit der di- oder polyfunktionellen Verbindung gemischt wird. Anstelle einer Mischung des Granulats des in Schritt a) erhaltenen Polyesters mit mindestens einer di- oder polyfunktionellen Verbindung ist es ebenfalls möglich, die di- oder polyfunktionelle Verbindung direkt in die Schmelze des in Schritt a) erhaltenen Polyesters einzuführen.

Das Compoundieren in Schritt b) des erfindungsgemäßen Verfahrens, das im Allgemeinen in der Schmelze durchgeführt wird, kann in beliebigen, dem Fachmann bekannten Vorrichtungen durchgeführt werden. Geeignete Vorrichtungen sind zum Beispiel Ein- oder Doppelschneckenextruder, Banbury-Mischer oder Kneter. Bevorzugt wird das Compoundieren in Schritt b) in einem Ein- oder Doppelschneckenextruder, besonders bevorzugt in einem Doppelschneckenextruder durchgeführt.

Die Dauer von Schritt b) ist abhängig von dem gewünschten Molekulargewicht des Polyesters. Im Allgemeinen wird Schritt b) in einem Zeitraum von 30 s bis 600 s, bevorzugt 30 s bis 300 s, besonders bevorzugt 60 s bis 240 s durchgeführt.

Somit können mit Hilfe des Verfahrens im Rahmen der vorliegenden Erfindung in sehr kurzen Reaktionszeiten Polyester mit hohen Molekulargewichten erhalten werden. Die mit diesen Verfahren erhältlichen Polyester weisen ein Molekulargewicht auf, das höher ist als das Molekulargewicht der in Schritt a) des erfindungsgemäßen Verfahrens hergestellten Polyester. Bevorzugt weisen die mit Hilfe des Verfahrens hergestellten Polyester ein Molekulargewicht M_{w}, ermittelt mittels GPC mit Polystyrolstandard, von > 65000 g/mol, besonders bevorzugt mindestens 70000 g/mol, ganz besonders bevorzugt 70000 bis 150000 g/mol auf. Die mit Hilfe des Verfahrens hergestellten Polyester weisen im Allgemeinen einen Schmelzindex (MFI) von 8 bis 40 cm³/10 min gemessen bei 250°C/2,16 kg (gemäß ISO 1133) auf.

Die in Schritt b) des Verfahrens erhaltene Polyesterschmelze kann nach dem Fachmann bekannten Verfahren zu Formteilen weiterverarbeitet werden. Beispielsweise kann die Polyesterschmelze mit Hilfe eines Extruders zu Formteilen in Form von Granulat oder Pellets verarbeitet werden oder direkt unter Ausbildung von Formteilen wie Monofilamenten, Fasern, Filmen oder anderen Formkörpern extrudiert werden. Dieses Verfahren sowie die weitere Verarbeitung sind dem Fachmann bekannt.

Nach den oben beschriebenen Verfahren sind Formteile mit einem Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0,1 Gew.-%, (jeweils bezogen auf das Gesamtgewicht aus Polyester und extrahierbaren Verbindungen und bestimmt durch 24-stündige Extraktion mit Xylol bei 139°C) herstellbar, wobei die Formteile einen Polyester umfassen, der nach Verfahren umfassend die Schritte
a) Herstellung eines Polyesters durch Polykondensation, und
b) Compoundieren des in Schritt a) erhaltenen Polyesters in Anwesenheit von mindestens einer di- oder polyfunktionellen Verbindung, die mit dem Polyester reaktiv ist, wobei ein Polyester erhalten wird, der ein höheres Molekulargewicht aufweist, als der in Schritt a) erhaltene Polyester,
herstellbar ist.

Die Formteile weisen einen Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0,1 Gew.-%, (jeweils bezogen auf das Gesamtgewicht aus Polyester und extrahierbaren Verbindungen und bestimmt durch 24-stündige Extraktion mit Xylol bei 139°C).

Im Rahmen der vorliegenden Erfindung besonders geeignete Formteile mit einem Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0,1 Gew.-%, (jeweils bezogen auf das Gesamtgewicht aus Polyester und extrahierbaren Verbindungen und bestimmt durch 24-stündige Extraktion mit Xylol bei 139°C) sind Bauteile für Haushaltsgeräte mit Lebensmittelkontakt, beispielsweise für Kaffeemaschinen, Wasserkocher, Ventile, Filter, oder Bauteile für Töpfe, Pfannen, Öfen oder Herde, Haushaltsgeräte wie Dampfbügeleisen, Bauteile für Automobilinnenräume wie Lautsprechergitter, Lüftungselemente, Fensterheber oder Schiebedächer, Automobilaußenanwendungen wie Scheinwerferblenden, Lebensmittelverpackungen, Pharmaverpackungen, medizintechnische Geräte wie Inhaler, Insulintester und Insulinpens oder Geräte für naßchemische Analytik.

Durch die erfindungsgemäße Verwendung werden Formteile umfassend Polyester bereitgestellt, die gute toxikologische, lebensmittelrechtliche und/oder olfaktorische Eigenschaften haben, ohne die mechanischen oder rheologischen Eigenschaften wesentlich zu verschlechtern.

Die nachfolgenden Beispiele erläutern die Erfindung zusätzlich.

### Beispiele

### Herstellung des Polyesters

### Schritt a)

Als Polybutylenterephthalat (Polyester A) wurde Ultradur^{®} B2550 (Viskositätszahl VN = 107 ml/g, gemessen gemäß ISO 1628 in 0,05g/ml Lösung in Phenol/o-Dichlorbenzol (1:1)) der BASF SE in Form von Polyestergranulat eingesetzt. Das Polybutylenterephthalat wurde durch Polykondensation der geeigneten Ausgangsstoffe hergestellt. Schritt b).

In Schritt b) erfolgte das Compoundieren des Polybutylenterephthalats gemäß Schritt a) (Polyester A) in Anwesenheit von verschiedenen Mengen des epoxid-modifizierten Styrol-Acryl-Polymers JONCRYL® ADR 4368 CS von Johnson Polymer bzw. BASF SE (im Folgenden ADR 4368), bzw. zum Vergleich in Anwesenheit von dem Fachmann bekannten und kommerziell erhältlichen üblichen Kettenverlängerern, Antioxidantien und/oder stabilisierend wirkenden Phosphorverbindungen.

Das Compoundieren erfolgte in einem Doppelschneckenextruder (DSM Midi 2000) bei einer Temperatur von 260 °C. Die in Tabelle 1 angegebenen Mengen ADR 4368 bzw. der zum Vergleich dienenden Kettenverlängerern, Antioxidantien und/oder stabilisierend wirkenden Phosphorverbindungen wurden mit dem Polyestergranulat, erhalten gemäß Schritt a), vorgemischt, und zu Granulat extrudiert. An diesem Granulat wurde jeweils der Gehalt an extrahierbaren Verbindungen (Gew.-%, bezogen auf das Gesamtgewicht aus Polyester und extrahierbaren Verbindungen) durch 24-stündige Extraktion mit Xylol bei 139°C sowie die Viskositätszahl VN gemäß ISO 1628 in 0,05g/ml Lösung in Phenol/o-Dichlorbenzol (1:1) bestimmt.

In Tabelle 1 sind die Eigenschaften der so hergestellten erfindungsgemäßen oder zum Vergleich dienenden Formkörper dargestellt.

**Tabelle 1 (mit "V" gekennzeichnete Beispiele dienen zum Vergleich)**

| Beispiel | V-1 | 2 | 3 | 4 | V-5 | V-6 | V-7 | V-8 | V-9 | V-10 | V-11 |
|---|---|---|---|---|---|---|---|---|---|---|---|
| Polyester A (Gew.-Teile) | 100 | 99,8 | 99,5 | 98 | 99,95 | 99,8 | 99,95 | 99,95 | 99,8 | 99,8 | 99,8 |
| ADR 4368 (Gew.-Teile) | - | 0,2 | 0,5 | 2 | - | - | - | - | - | - | - |
| Natriumhypophosphit (Gew.-Teile) | - | - | - | - | 0,05 | 0,2 | - | - | - | - | - |
| Phosphorsäure (Gew.-Teile) | - | - | - | - | - | - | 0,05 | - | - | - | - |
| Triphenylphosphit (Gew.-Teile) | - | - | - | - | - | - | - | 0,05 | - | - | - |
| Irgafos^{®} 168 (Gew.-Teile) | - | - | - | - | - | - | - | - | 0,2 | - | - |
| Irganox^{®} 1010 (Gew.-Teile) | - | - | - | - | - | - | - | - | - | 0,2 | - |
| Irgafos PEPQ (Gew.-Teile) | - | - | - | - | - | - | - | - | - | - | 0,2 |
| Extrahierbare Verbindungen (Gew.-%) | 0,51 | 0,01 | 0,01 | 0,10 | 0,74 | 0,64 | 0,59 | 0,70 | 0,85 | 0,80 | 0,69 |
| VN (ml/g) | 103,8 | 104,2 | 118,7 | 138,4 | 102,2 | 99,9 | 103,5 | 102,3 | 103 | 105,5 | 105,4 |

Die Beispiele belegen, daß durch die erfindungsgemäßen Verwendungen, Formteile umfassend Polyester bereitgestellt werden, die einen verringerten Gehalt an extrahierbaren Verbindungen, und daher gute toxikologische, lebensmittelrechtliche und/oder olfaktorische Eigenschaften haben, ohne die mechanischen oder rheologischen Eigenschaften wesentlich zu verschlechtern.

## Patentansprüche

1. Verwendung eines Polyesters zur Herstellung von Formteilen mit einem Gehalt an extrahierbaren Verbindungen im Bereich von 0,01 Gew.-% bis 0,5 Gew.-%, bevorzugt von 0,01 Gew.-% bis 0,3 Gew.-%, besonders bevorzugt von 0,01 Gew.-% bis 0.1 Gew.-%, (jeweils bezogen auf das Gesamtgewicht aus Polyester und extrahierbaren Verbindungen und bestimmt durch 24-stündige Extraktion mit Xylol bei 139°C), wobei der Polyester nach Verfahren umfassend die Schritte
a) Herstellung eines Polyesters durch Polykondensation, und
b) Compoundieren des in Schritt a) erhaltenen Polyesters in Anwesenheit von mindestens einer di- oder polyfunktionellen Verbindung, die mit dem Polyester reaktiv ist, wobei ein Polyester erhalten wird, der ein höheres Molekulargewicht aufweist, als der in Schritt a) erhaltene Polyester,
herstellbar ist.

2. Verwendung nach Anspruch 1, **dadurch gekennzeichnet, dass** der Polyester ausgewählt ist aus der Gruppe bestehend aus Polybutylenterephthalat, Polyethylenterephthalat und Mischungen daraus.

3. Verwendung nach Anspruch 2, **dadurch gekennzeichnet, dass** der Polyester Polybutylenterephthalat Ist.

4. Verwendung nach einem der Ansprüche 1 bis 3, **dadurch gekennzeichnet, dass** die mindestens eine di- oder polyfunktionelle Verbindung ausgewählt ist aus Verbindungen enthaltend Imido-, Amido-, Epoxy- und/oder Isocyanatogruppen.

5. Verwendung nach Anspruch 4, **dadurch gekennzeichnet, dass** die di- -oder polyfunktionelle Verbindung ein Polymerisationsprodukt ist, das durch polymerisation von mindestens einem epoxyfunktionellen (meth)acrylischen Monomer und mindestens einem Styrolmonomer und/oder (meth)acrylischen Monomer erhältlich ist.

6. Verwendung nach einem der Ansprüche 1 bis 5, **dadurch gekennzeichnet, dass** die di- oder polyfunktionelle Verbindung in einer Menge von 0,01 Gew.-% bis 2 Gew.-%, bevorzugt 0,05 Gew.-% bis 0,5 Gew.-%, besonders bevorzugt 0,1 Gew.-% bis 0,3 Gew.-%, bezogen auf die Gesamtmenge des Polyesters, eingesetzt wird.

7. Verwendung nach einem der Ansprüche 1 bis 6, **dadurch gekennzeichnet, dass** das Compoundieren in Schritt b) in einem Doppelschneckenextruder durchgeführt wird.

8. Verwendung nach einem der Ansprüche 1 bis 7, **dadurch gekennzeichnet, dass** in Schritt b) mindestens ein Additiv ausgewählt aus der Gruppe bestehend aus Stabilisatoren bzw. Inhibitoren gegen oxidative Zersetzung, thermische Zersetzung bzw. Zersetzung durch ultraviolettes Licht, Gleitmitteln, Farbmitteln. Füllstoffen, Flammschutzmitteln, Keirnbildnern.

## Claims

1. The use of a polyester for producing moldings with content of extractable compounds in the range from 0.01% by weight to 0.5% by weight, preferably from 0.01% by weight to 0.3% by weight, particularly preferably from 0.01% by weight to 0.1% by weight (based in each case on the total weight of polyester and extractable compounds and determined via 24-hour extraction with xylene at 139°C), where the polyester can be produced by processes comprising the following steps:
a) production of a polyester via polycondensation, and
b) compounding of the polyester obtained in step a) in the presence of at least one di- or polyfunctional compound which is reactive toward the polyester, thus giving a polyester which has a higher molecular weight than the polyester obtained in step a).

2. The use according to claim 1, wherein the polyester is one selected from the group consisting of polybutylene terephthalate, polyethylene terephthalate, and mixtures thereof.

3. The use according to claim 2, wherein the polyester is polybutylene terephthalate.

4. The use according to any of claims 1 to 3, wherein the at least one di- or polyfunctional compound is one selected from compounds comprising imido, amido, epoxy, and/or isocyanato groups.

5. The use according to claim 4, wherein the di- or polyfunctional compound is a polymerization product which is obtainable via polymerization of at least one epoxy-functional (meth)acrylic monomer and of at least one styrene monomer and/or (meth) acrylic monomer.

6. The use according to any of claims 1 to 5, wherein the amount used of the di- or polyfunctional compound is from 0.01% by weight to 2% by weight, preferably from 0.05% by weight to 0.5% by weight, particularly preferably from 0.1% by weight to 0.3% by weight, based on the total amount of the polyester.

7. The use according to any of claims 1 to 6, wherein the compounding in step b) is carried out in a twin-screw extruder.

8. The use according to any of claims 1 to 7, wherein, in step b), at least one additive is added, selected from the group consisting of stabilizers and, respectively, inhibitors in relation to oxidative decomposition, thermal decomposition, or decomposition via ultraviolet light, lubricants, colorants, fillers, flame retardants, and nucleating agents.

## Revendications

1. Utilisation d'un polyester pour la fabrication de pièces moulées ayant une teneur en composés extractibles dans la plage allant de 0,01 % en poids à 0,5 % en poids, de préférence de 0,01 % en poids à 0,3 % en poids, de manière particulièrement préférée de 0,01 % en poids à 0,1 % en poids (à chaque fois par rapport au poids total de polyester et de composés extractibles et déterminée par extraction pendant 24 heures avec du xylène à 139 °C), le polyester pouvant être fabriqué par un procédé comprenant les étapes suivantes :
a) la fabrication d'un polyester par polycondensation et
b) le malaxage du polyester obtenu à l'étape a) en présence d'au moins un composé bi- ou polyfonctionnel, qui est réactif avec le polyester, un polyester présentant un poids moléculaire plus élevé que le polyester obtenu à l'étape a) étant obtenu.

2. Utilisation selon la revendication 1, **caractérisée en ce que** le polyester est choisi dans le groupe constitué par le polybutylène téréphtalate, le polyéthylène téréphtalate et leurs mélanges.

3. Utilisation selon la revendication 2, **caractérisée en ce que** le polyester est le polybutylène téréphtalate.

4. Utilisation selon l'une quelconque des revendications 1 à 3, **caractérisée en ce que** le ou les composés bi- ou polyfonctionnels sont choisis parmi les composés contenant des groupes imido, amido, époxy et/ou isocyanato.

5. Utilisation selon la revendication 4, **caractérisée en ce que** le composé bi- ou polyfonctionnel est un produit de polymérisation qui peut être obtenu par polymérisation d'au moins un monomère (méth)acrylique à fonction époxy et d'au moins un monomère de styrène et/ou d'un monomère (méth)acrylique.

6. Utilisation selon l'une quelconque des revendications 1 à 5, **caractérisée en ce que** le composé bi- ou polyfonctionnel est utilisé en une quantité de 0,01 % en poids à 2 % en poids, de préférence de 0,05 % en poids à 0,5 % en poids, de manière particulièrement préférée de 0,1 % en poids à 0,3 % en poids, par rapport à la quantité totale du polyester.

7. Utilisation selon l'une quelconque des revendications 1 à 6, **caractérisée en ce que** le malaxage à l'étape b) est réalisé dans une extrudeuse bivis.

8. Utilisation selon l'une quelconque des revendications 1 à 7, **caractérisée en ce qu'**à l'étape b), au moins un additif choisi dans le groupe constitué par les stabilisateurs ou inhibiteurs contre la décomposition oxydative, la décomposition thermique ou la décomposition par lumière ultraviolette, les lubrifiants, les colorants, les charges, les agents ignifuges, les agents de nucléation est ajouté.
